(19) Europäisches Patentamt
European Patent Office
Office européen des brevets

(11) **EP 3 391 129 B1**

(12) **EUROPÄISCHE PATENTSCHRIFT**

(45) Veröffentlichungstag und Bekanntmachung des Hinweises auf die Patenterteilung:
**16.04.2025  Patentblatt 2025/16**

(21) Anmeldenummer: **16819450.4**

(22) Anmeldetag: **09.12.2016**

(51) Internationale Patentklassifikation (IPC):
**G02B 27/01** (2006.01)     **G02C 7/02** (2006.01)
**G02B 27/42** (2006.01)

(52) Gemeinsame Patentklassifikation (CPC):
**G02C 7/02; G02B 27/0172; G02B 27/4211;**
**G02B 27/4272;** G02B 2027/0178; G02C 2202/20;
G02C 2202/22

(86) Internationale Anmeldenummer:
**PCT/EP2016/080499**

(87) Internationale Veröffentlichungsnummer:
**WO 2017/102600 (22.06.2017 Gazette 2017/25)**

(54) **OPHTHALMOLOGISCHES OPTISCHES ELEMENT UND VERFAHREN ZUM AUSLEGEN EINES OPHTHALMOLOGISCHEN OPTISCHEN ELEMENTS**

OPTHALMOLOGICAL OPTICAL ELEMENT AND METHOD FOR CONSTRUCTING AN OPTHALMOLOGICAL OPTICAL ELEMENT

ÉLÉMENT OPTIQUE OPHTALMIQUE ET PROCÉDÉ DE POSE D'UN ELEMENT OPTIQUE OPHTALMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2015  DE 102015122302**

(43) Veröffentlichungstag der Anmeldung:
**24.10.2018  Patentblatt 2018/43**

(73) Patentinhaber: **tooz technologies GmbH**
**73430 Aalen (DE)**

(72) Erfinder:
• **DOBSCHAL, Hans-Juergen**
**99510 Kleinromstedt (DE)**
• **LINDIG, Karsten**
**99084 Erfurt (DE)**

(74) Vertreter: **Witte, Weller & Partner Patentanwälte mbB**
**Postfach 10 54 62**
**70047 Stuttgart (DE)**

(56) Entgegenhaltungen:
EP-A2- 1 072 906        DE-A1- 102006 061 066
DE-A1- 102010 047 846   DE-B3- 102014 207 500
US-A- 5 117 306         US-A1- 2006 050 234

## Beschreibung

Die vorliegende Anmeldung betrifft ein ophthalmologisches optisches Element zur Korrektur von Sehfehlern, insbesondere Brillenglas, mit einem ersten refraktiven optischen Substrat sowie einem ersten und einem zweiten diffraktiven optischen Element. Die vorliegende Anmeldung betrifft ferner insbesondere ein computerimplementiertes Verfahren zum Auslegen eines ophthalmologischen optischen Elements, eine Brille sowie eine kopfgetragene Anzeigevorrichtung (Head-Mounted Display) mit einem derartigen ophthalmologischen optischen Element.

Klassischerweise werden Rezeptbrillen nach seit Jahrzehnten bewährten Methodiken hergestellt. Durch Auswahl eines vorderen, objektseitigen und eines hinteren, augenseitigen Krümmungsradius des Brillenglases wird hierbei eine jeweils notwendige Sehstärke eingestellt. Aus ästhetischen und herstellungstechnischen Gründen wird der objektseitige Außenradius im Allgemeinen sphärisch hergestellt, wobei er für einen jeweiligen Dioptrienbereich einen bestimmten vorgegebenen Wert annimmt, welcher sogenannten Vorzugsradientabellen entnommen werden kann. Mit Hilfe des augenseitigen Innenradius wird dann die jeweilige genaue Sehstärke generiert. Im einfachsten Falle kann dies auch ein sphärischer Radius sein. Spezielle Seheigenschaften wie beispielsweise Astigmatismus inklusive Drehwinkel des Astigmatismus oder Abbildungseigenschaften für äußere Sehwinkel können ebenfalls über den inneren Radius realisiert werden. Der äußere Radius wird dazu vorteilhaft derart ausgewählt, dass die Korrektionsmöglichkeiten durch den inneren Radius nicht negativ beeinflusst werden. Beispielsweise sollte bei stark positiven Dioptrienwerten ein relativ kurzer Außenradius ausgewählt werden.

Je nach erforderlicher Dioptrienzahl kann sich somit ein mehr oder wenig stark durchgebogenes Brillenglas ergeben, was bei hohen Dioptrienwerten mitunter nur ein vermindertes ästhetisches Aussehen und einen schlechten Tragekomfort bietet. Insbesondere ist es bei Sportbrillengläsern mit ihrer gewünschten, eng anliegenden Form, nur sehr eingeschränkt möglich, negative Dioptrienwerte zu erzeugen.

Es ist ferner bekannt, dass eine dioptrische Wirkung mittels eines diffraktiven optischen Elements (DOE) erzeugt werden kann. Da diffraktive optische Elemente eine im Vergleich zu refraktiver Optik sehr starke Dispersion besitzen, können diese von ihrer Wirkung her nur sehr dosiert eingesetzt werden. Spätestens ab einer Wirkung von +/-2 dptr entstehen starke chromatische Aberrationen, insbesondere Farbquerfehler am Feldrand, die nicht mehr tolerierbar sind.

Zu den Farbfehlern gehört einerseits der Farblängsfehler, der unterschiedliche Foki für unterschiedliche Wellenlängen erzeugt. Dieser wird auch als Achsenabweichung oder longitudinale chromatische Aberration bezeichnet. Neben dem Farblängsfehler kann als weiterer Farbfehler ein Farbquerfehler auftreten, der sich durch Farbsäume bzw. Farbränder in der Bildebene, im Fall einer Sehhilfe auf der Netzhaut des Auges, äußert, die der Nutzer wahrnimmt und ab einer gewissen Stärke als störend empfindet. Der Farbquerfehler wird auch als Farbvergrößerungsfehler oder transversale chromatische Aberration bezeichnet. Aus der DE 10 2010 047 846 A1 ist eine Kombination aus einem ersten Linsenelement und einem zweiten Linsenelement bekannt, welche zumindest teilweise achromatisch zusammenwirken. Der Einsatz eines diffraktiven optischen Elements ist in diesem Kontext jedoch nicht offenbart. Vielmehr kommen klassische Linsenelemente zum Einsatz.

Die Druckschrift US 2006/0050234 A1 offenbart eine diffraktive Linse zur Korrektur von Sehfehlern. Die Linse weist eine Kombination aus einem ersten diffraktiven optischen Element (WSD) und einem zweiten diffraktiven optischen Element (MOD) auf. Das zweite diffraktive Element stellt dabei die Grundbrechkraft bzw. die hauptsächliche fokussierende Wirkung der Linse bereit. Das erste diffraktive Element stellt lediglich eine additive Nahbereichskorrektur bereit.

In der Druckschrift US 2006/0050234 A1 ist das zweite diffraktive Element eine sogenannte multiorder diffraktive (MOD) Linse, welche Licht mehrerer verschiedener Wellenlängen aus verschiedenen Beugungsordnungen einer gemeinsamen Fokalentfernung zuführt. Beispielsweise werden grünes Licht ($\lambda_g$ = 550nm) aus der fünften Beugungsordnung und blaues Licht ($\lambda_b$ = 471nm) aus der siebten Beugungsordnung der gleichen Fokalentfernung zugeführt. Eine derartige MOD Struktur wird auch als polychromatische diffraktive Linse bezeichnet.

Zusätzlich zu der Grundbrechkraft des zweiten diffraktiven Elements (MOD) stellt dass erste diffraktive Element (WSD) eine additive fokussierende Wirkung zur Nahbereichskorrektur bereit. Hierzu wird Licht unterschiedlicher Beugungsordnungen gleichzeitig zwei oder mehreren unterschiedlichen Fokalentfernungen zugeführt. Das erste optische Element wird hierbei als "wavefront splitting diffractive structure" (WSD) bezeichnet. Auch hier gilt, dass nur eine begrenzte diffraktive Brechkraft addiert werden kann, um den Farbfehler im Rahmen zu halten.

In Kombination wirken das erste diffraktive Element und das zweite diffraktive Element der Druckschrift US 2006/0050234 A1 dahingehend zusammen, dass durch das MOD eine Grundbrechkraft bereitgestellt wird und durch das WSD eine Mehrfokalwirkung erzeugt wird. Dadurch dass das WSD eine viel geringere optische Brechkraft als das MOD aufweist, halten sich Farbfehler durch das erste diffraktive Element (WSD) in Grenzen. Eine wechselseitige Kompensation eines Farbfehlers ist hingegen nicht offenbart.

Ein Nachteil dieses Ansatzes besteht jedoch darin, dass, weiterhin ein Farbfehler, insbesondere ein Farbquerfehler, vorliegt. Ferner werden durch das WSD im Gegensatz zu Gleitsichtgläsern mehrere Fokalentfernungen gleichzeitig und nicht örtlich auf dem Brillenglas getrennt bereitgestellt werden, was nur bedingt gewünscht ist.

DE 10 2006 061 066 A1 offenbart eine Doppel-DOE-Anordnung, welche eine starke Separierung ungewünschter Ordnungen bewirkt, welche dann beim weiteren Durchlaufen des Optiksystems in Lichtausbreitungsrichtung des Nutzlichts durch nachfolge Linsenfassungen und/oder Blenden geblockt werden bzw. beim Durchlaufen des optischen Systems außerhalb des vorgesehenen genutzten Bildbereichs ankommen.

US 5,117,306 offenbart eine bifokale diffraktive optische Linse, welche zwei Brennpunkte bzw. Fokalentfernungen aufweist. Es wird vorgeschlagen, für die unterschiedlichen Brennpunkte eine unterschiedliche bzw. abgestimmte chromatische Aberration bereitzustellen.

EP 1 072 906 A2 offenbart ein diffraktives optisches Element, welches eine Wellenlängenabhängigkeit einer Diffraktionseffizienz verbessern soll.

Der Erfindung liegt daher die Aufgabe zugrunde, ein verbessertes ophthalmologisches optisches Element, eine verbesserte Brille sowie eine kopfgetragene Anzeigevorrichtung mit einem derartigen ophthalmologischen optischen Element, ein verbessertes computerimplementiertes Verfahren zum Auslegen eines ophthalmologisches optisches Elements, ein verbessertes Verfahren zum Herstellen eines ophthalmologisches optisches Elements, bereitzustellen, sowie ein entsprechendes Computerprogrammprodukt bereitzustellen, welche die vorstehend beschriebenen Nachteile konventioneller Rezeptbrillen und des Standes der Technik zumindest teilweise überwinden.

Gemäß einem ersten Aspekt der Erfindung wird daher vorgeschlagen, ein ophthalmologisches optisches Element zur Korrektur von Sehfehlern bereitzustellen, mit

> einem ersten refraktiven optischen Substrat, welches eine positive oder negative erste optische Brechkraft aufweist;
> einem ersten diffraktiven optischen Element, welches eine zweite optische Brechkraft aufweist;
> einem zweiten diffraktiven optischen Element, welches eine dritte optische Brechkraft aufweist;
> wobei das erste diffraktive optische Element und das zweite diffraktive optische Element eine entgegengesetzte optische Brechkraft aufweisen und der Betrag einer Summe der zweiten optischen Brechkraft des ersten diffraktiven optischen Elements und der dritten optischen Brechkraft des zweiten diffraktiven optischen Elements geteilt durch einen Betrag einer Differenz der zweiten optischen Brechkraft und der dritten optischen Brechkraft kleiner als 1/10, insbesondere kleiner als 1/15, insbesondere kleiner als 1/20 ist. Insbesondere wirken das erste diffraktive optische Element und das zweite diffraktive optische Element zumindest teilweise achromatisch zusammen. Insbesondere können das erste diffraktive optische Element und das zweite diffraktive optische Element zusammen mit dem ersten refraktiven optischen Element achromatisch zusammenwirken.

Die dioptrische Wirkung des ophthalmologischen optischen Elements ergibt sich insbesondere aus der Summe der ersten, zweiten und dritten Brechkraft. Da das erste diffraktive optische Element (DOE) und das zweite diffraktive optische Element eine entgegengesetzte Brechkraft bzw. Brechkraft mit unterschiedlichem Vorzeichen aufweisen, heben sich die Beiträge der zweiten und dritten Brechkraft zumindest teilweise gegeneinander auf. Die Erfinder haben erkannt, dass überraschenderweise durch die Kombination der beiden diametralen DOEs bzw. DOEs mit entgegengesetzter Brechkraft erreicht werden kann, dass der Farbquerfehler verringert wird und insbesondere noch geringer als bei konventionellen klassisch optimierten refraktiven Brillengläsern sein kann. Durch die entsprechende Verwendung von zwei DOEs mit entgegengesetzter Brechkraft kann also eine jeweilige Dioptrienanforderung erfüllt und gleichzeitig eine gute optische Performance auch am Bildfeldrand erreicht werden.

Das erste diffraktive optische Element und das zweite diffraktive optische Element haben eine etwa betragsmäßig gleiche optische Brechkraft. Der Betrag einer Summe der zweiten optischen Brechkraft des ersten diffraktiven optischen Elements und der dritten optischen Brechkraft des zweiten diffraktiven optischen Elements geteilt durch einen Betrag einer Differenz der zweiten optischen Brechkraft und der dritten optischen Brechkraft ist kleiner als 1/10, insbesondere kleiner als 1/15, insbesondere kleiner als 1/20,

$$(1) \qquad K = \frac{|D2+D3|}{|D2-D3|} \leq x \ \text{mit} \ x \leq \frac{1}{10}, \ \text{insbesondere} \ x \leq \frac{1}{15}, \ \text{insbesondere} \ x \leq \frac{1}{20},$$

wobei D2 die zweite optische Brechkraft und D3 die dritte optische Brechkraft bezeichnet. Da D2 und D3 entgegengesetzte Vorzeichen haben, ist der Betrag der Summe $|D2+D3|$ kleiner als der Betrag der Differenz $|D2-D3|$. Der in Gleichung (1) angegebene Quotient kann auch als Kontrast bzw. Kontrastwert K bezeichnet werden.

Es wird vorgeschlagen, ein ophthalmologisches optisches Element bereitzustellen, mit

> einem ersten refraktiven optischen Substrat, welches eine positive oder negative erste optische Brechkraft aufweist;
> einem ersten diffraktiven optischen Element, welches eine zweite optische Brechkraft aufweist;
> einem zweiten diffraktiven optischen Element, welches eine dritte optische Brechkraft aufweist;
> wobei das erste diffraktive optische Element und das zweite diffraktive optische Element eine entgegengesetzte optische Brechkraft aufweisen, wobei der Betrag einer Summe der zweiten optischen Brechkraft des ersten diffraktiven optischen Elements und der dritten optischen Brechkraft des zweiten diffraktiven optischen Elements geteilt durch einen Betrag einer Differenz der zweiten optischen Brechkraft und der dritten optischen Brechkraft kann kleiner als 1/10, insbesondere kleiner als 1/15, insbesondere kleiner als 1/20 ist.

Entgegen der üblichen Bestrebung des Fachmanns, die Brechkraft eines DOEs aufgrund der üblicherweise starken chromatischen Aberration von DOEs möglichst klein zu wählen, wird also vorgeschlagen zwei DOEs mit höherer Brechkraft und entgegengesetztem Vorzeichen vorzusehen. Die resultierende Brechkraft ergibt sich insbesondere aus der Summe der zweiten und dritten Brechkraft. Die Erfinder haben erkannt, dass, indem das erste und zweite DOE eine in etwa betragsmäßig gleiche optische Brechkraft aufweisen, wie durch die vorstehenden Angaben definiert, eine vorteilhafte wechselseitige Kompensation von Farbfehlern einschließlich Farbquerfehlern erreicht werden kann. Das erste DOE und das zweite DOE können somit zumindest teilweise achromatisch zusammenwirken. Die zusätzliche Brechkraft, die sich aus der Summe der beiden DOEs ergibt, kann einen sehr wesentlichen Anteil der Gesamtbrechkraft einnehmen. Typischerweise können hierbei beispielsweise +/- 3 dptr durch die beiden DOEs aufaddiert werden. Bei der Verwendung eines einzelnen DOEs kann zum Vergleich typischerweise nur eine Brechkraft von ca. 0.1 bis 0.3 dptr aufaddiert werden, da sonst die chromatischen Aberrationen zu stark ansteigen.

Ein weiterer Vorteil der vorgeschlagenen Lösung kann darin bestehen, dass nur wenige erste optische Substrate vorgehalten werden müssen. Vorzugsweise sind jeweils nur ein oder zwei optische Substrate mit positiver bzw. negativer Brechkraft erforderlich. Eine weitergehende Anpassung an die Sehstärke des Nutzers kann durch das erste und zweite DOE vorgenommen werden.

Ein weiterer Vorteil der vorgeschlagenen Lösung kann darin bestehen, dass auch bei hohen positiven oder negativen Dioptrienwerten eine ästhetische Brillenglasform erreicht werden kann. Eine über die Brechkraft des ersten refraktiven optischen Substrat hinausgehende Korrektur kann mittels der DOEs erfolgen. Vorzugsweise sind somit keine Gläser mit hoher Mitten- oder Randdicke notwendig, wodurch auch eine Material- und Gewichtsreduktion erzielt werden kann.

Ein weiterer Vorteil der vorgeschlagenen Lösung kann darin bestehen, dass nahezu beliebige optische Wirkungen erzielbar sind, da die DOE-Wirkung auf mathematisch allgemeinen x-y-DOEs beruhen kann.

Ein weiterer Vorteil der vorgeschlagenen Lösung kann darin bestehen, dass auch Gleitsichtglas- oder Mehrbereichsfunktionen, beispielsweise wie bei einer Bifokalbrille, ohne größeren Aufwand realisiert werden können.

Ein weiterer Vorteil der vorgeschlagenen Lösung kann darin bestehen, dass auch Sportbrillen bzw. Brillen mit vorgegebener starker Frontkrümmung mit Fehlsichtigkeitskorrekturen versehen werden können.

Die im Rahmen der vorliegenden Anmeldung verwendete Terminologie entspricht soweit nicht anders angegeben den Definitionen der Norm DIN EN ISO 13666:1998-11 des DIN Deutschen Institut für Normung e.V.

Im Rahmen der vorliegenden Offenbarung kann unter einem "ophthalmologischen optischen Element" ein optisches Element verstanden werden, welches der Korrektur von Sehfehlern dient, also insbesondere eine Brille bzw. ein Brillenglas, eine Kontaktlinse aber auch ein intraokulares Implantat oder dergleichen. Hinsichtlich der Materialien umfasst beispielsweise ein Brillenglas nicht nur anorganisches bzw. Mineralglas sondern auch organisches Material bzw. Kunststoff.

Unter Brechkraft wird der Kehrwert der Brennweite f verstanden. Die Einheit der Brechkraft ist die Dioptrie 1 dptr $= 1 m^{-1}$. Mit anderen Worten kann mit der Brechkraft dioptrische Wirkung, insbesondere eine fokussierende Wirkung, einer refraktiven Linse oder eines diffraktiven optischen Elements angegeben werden. Die geforderte Wirkung soll in einem Konstruktionsbezugspunkt auftreten, der insbesondere auf der Rückfläche des jeweiligen Elements liegen kann. Eine prismatische Wirkung kann in einem Prismenbezugspunkt eintreten, der mit dem Konstruktionsbezugspunkt auseinanderfallen kann.

Unter "zumindest teilweise achromatisch miteinander zusammenwirken" bzw. "achromatisch zusammenwirken" wird im Sinne der vorliegenden Erfindung verstanden, dass der Farbfehler oder die Farbfehler nicht unbedingt vollständig eliminiert wird bzw. werden, sondern zumindest abgeschwächt wird bzw. werden.

Unter dem Begriff "optische Achse" wird eine Gerade verstanden, die auf beiden optischen Flächen eines Brillenglases senkrecht steht und entlang welcher Licht das Brillenglas unabgelenkt durchtritt, vgl. Nr. 4.8 der Norm DIN EN ISO 13666.

Unter einer "Querschnittsebene" wird im Rahmen der vorliegenden Anmeldung ein Querschnitt durch das ophthalmologische optische Element verstanden, der parallel zu einer vorgesehenen Hauptdurchblickrichtung eines Nutzers durch das optische Element liegt. Bei der Querschnittsebene kann es sich um eine Meridianebene handeln, wenn das optische Element eine optische Achse aufweist. Weist beispielsweise ein Brillenglas keine optische Achse auf, kann die Querschnittsebene den geometrischen Mittelpunkt gemäß Nr. 5.5 der Norm DIN EN ISO 13666 enthalten, nämlich den Schnittpunkt der horizontalen und vertikalen Mittellinie des Kastens, bezogen auf die Form des ungerandeten Brillenglases. Eine "geometrische Mittelachse" verläuft dann durch den geometrischen Mittelpunkt parallel zu einer vorgesehenen Hauptdurchblickrichtung durch das optische Element. Somit kann die Querschnittsebene den Durchblickpunkt nach Nr. 5.11 der Norm DIN EN ISO 13666, nämlich den Schnittpunkt der Fixierlinie mit der Rückfläche des optischen Elements enthalten.

Gemäß einem zweiten Aspekt der Erfindung wird des Weiteren ein computerimplementiertes Verfahren zum Auslegen eines ophthalmologischen optischen Elements, insbesondere Brillenglases, für einen Nutzer vorgeschlagen, wobei das ophthalmologische optische Element

ein erstes optisches Substrat, welches eine positive oder negative erste optische Brechkraft aufweist;
ein erstes diffraktives optischen Element, welches eine zweite optische Brechkraft aufweist; und
ein zweites diffraktives optisches Element, welches eine dritte optische Brechkraft aufweist; aufweist,
wobei das erste diffraktive optische Element und das zweite diffraktive optische Element eine entgegengesetzte optische Brechkraft aufweisen;
wobei das Verfahren die folgenden Schritte aufweist:

- Auswahl des ersten optischen Substrats, welches eine positive oder negative erste optische Brechkraft aufweist, gemäß einem zu korrigierenden Dioptrienbereich;
- Bereitstellen des ersten diffraktiven optischen Elements, welches die zweite optische Brechkraft aufweist, und des zweiten diffraktiven optischen Elements, welches die dritte optische Brechkraft aufweist. Insbesondere wirken das erste diffraktive optische Element und das zweite diffraktive optische Element zumindest teilweise achromatisch zusammen.

Auf diese Weise kann ein ophthalmologisches optisches Element ausgelegt werden, dass die voranstehend beschriebenen Vorteile aufweist. Die Auswahl des ersten optischen Substrats, welches eine erste positive oder negative optische Brechkraft aufweist, kann vorzugsweise gemäß einem zu korrigierenden Dioptrienbereich erfolgen. Mit anderen Worten kann das erste optische Substrat eine Basis-Brechkraft für einen Bereich an zu korrigierenden Dioptrienwerten von Nutzern bereitstellen. Beispielsweise kann ein erstes optisches Substrat als Basis für einen Bereich von beispielsweise 0 bis +4 dptr dienen und ein alternatives erstes optisches Substrat für einen Bereich von beispielsweise +4 bis + 8 dptr ausgewählt werden. Eine Anpassung der resultierenden Wirkung des ophthalmologischen optischen Elements an den zu korrigierenden Dioptrienwert des Nutzers im jeweiligen Bereich kann dann mittels des ersten und zweiten diffraktiven optischen Elements erfolgen.

Das erste diffraktive optische Element und das zweite diffraktive optische Element werden derart ausgewählt, dass sie eine etwa betragsmäßig gleiche optische Brechkraft haben. Das erste und zweite diffraktive optische Element sind derart ausgewählt, dass ein Betrag einer Summe der zweiten optischen Brechkraft des ersten diffraktiven optischen Elements und der dritten optischen Brechkraft des zweiten diffraktiven optischen Elements geteilt durch einen Betrag einer Differenz der zweiten optischen Brechkraft und der dritten optischen Brechkraft kleiner als 1/10, insbesondere kleiner als 1/15, insbesondere kleiner als 1/20 ist.

Gemäß einem dritten Aspekt der Erfindung wird des Weiteren ein Verfahren zum Herstellen eines ophthalmologischen optischen Elements vorgeschlagen, dass die Schritte des Auslegens des ophthalmologischen optischen Elements gemäß dem zweiten Aspekt der Erfindung aufweist und des Weiteren den Schritt des Herstellens des ophthalmologischen optischen Elements.

Auf diese Weise kann ein ophthalmologischen optisches Elements hergestellt werden, dass die voranstehend beschriebenen Vorteile aufweist.

Gemäß einem vierten Aspekt der Erfindung wird des Weiteren ein Computerprogrammprodukt mit Programmcode vorgeschlagen, der dazu ausgelegt ist, ein Verfahren gemäß dem zweiten Aspekt der Erfindung oder einer seiner Ausführungsformen auszuführen, wenn das Computerprogrammprodukt auf einer Datenverarbeitungseinrichtung ausgeführt wird.

Das Computerprogrammprodukt ermöglicht somit das voranstehend beschriebene Auslegen eines ophthalmologischen optischen Elements und weist daher dieselben Vorteile auf.

Gemäß einem fünften Aspekt der Erfindung wird des Weiteren eine Brille mit einer Fassung und einem ersten und einem zweiten Brillenglas vorgeschlagen, wobei das erste und/oder zweite Brillenglas ein ophthalmologisches optisches Element gemäß dem ersten Aspekt der Erfindung oder einer seiner Weiterbildungen ist.

Die Brille kann somit die voranstehend beschriebenen Vorteile aufweisen. Insbesondere kann die Brille eine vorgegebene starke Frontkrümmung aufweisen und dennoch mit einer Fehlsichtigkeitskorrektur versehen werden. Dies ist insbesondere bei eng anliegenden Brillen wie Sportbrillen vorteilhaft.

In einer Ausführungsform des ophthalmologischen optischen Elements gemäß dem ersten Aspekt der Erfindung kann vorgesehen sein, dass das erste optische Substrat eine Vorderfläche und eine Rückfläche aufweist, wobei das erste diffraktive optische Element auf der Seite der Vorderfläche angeordnet ist und/oder das zweites diffraktive optische Element auf der Seite der Rückfläche angeordnet ist.

Unter Vorderfläche bzw. objektseitiger Fläche ist die Fläche des ersten optischen refraktiven Substrats zu verstehen, die bei bestimmungsgemäßem Gebrauch des ophthalmologischen optischen Elements vom Auge des Nutzers abgewandt liegt. Unter Rückfläche bzw. augenseitiger Fläche ist die Fläche des ersten optischen refraktiven Substrats zu verstehen, die bei bestimmungsgemäßem Gebrauch des ophthalmologischen optischen Elements vom Auge des Nutzers zugewandt liegt. Statt der Begriffe Vorderfläche und Rückfläche können auch die Begriffe erste optisch wirkende Fläche und zweite optisch wirkenden Fläche verwendet werden.

In einer Ausführungsform des ophthalmologischen optischen Elements gemäß dem ersten Aspekt der Erfindung kann vorgesehen sein, dass das ophthalmologische optische Element ein zweites optisches Substrat aufweist, welches das erste diffraktive optische Element und/oder das zweite diffraktive optische Element aufweist.

Auf diese Weise kann das erste refraktive optische Substrat vorzugsweise unverändert für eine Vielzahl von Nutzern verwendet werden. Dadurch kann die Fertigung vereinfacht und standardisiert werden.

In einer Weiterbildung dieser Ausführungsform kann das erste optische Substrat eine Vorderfläche und eine Rückfläche aufweisen, wobei das zweite optische Substrat auf der Seite der Vorderfläche oder der Rückfläche des ersten optischen Substrats angeordnet ist.

Vorzugsweise ist das zweite optische Substrat auf der Rückfläche des ersten optischen Substrats angeordnet. Ferner weist das zweite optische Substrat vorzugsweise das erste und das zweite DOE auf. Auf diese Weise können ein oder mehrere standardisierte erste refraktive optische Substrat eingesetzt werden, welche dann durch Auswahl der DOEs auf dem zweiten optischen Substrat für den Nutzer angepasst bzw. individualisiert werden.

Insbesondere kann das zweite optische Substrat eine Folie, ein Glas oder eine Kunststoffschale aufweisen oder daraus bestehen. Beispielsweise kann das zweite optische Substrat eine Folie sein, welche das erste und zweite DOE aufweist. Eine solche Folie kann vorzugsweise auf die Rückfläche des ersten refraktiven optischen Substrats aufgebracht sein. Dabei kann das erste optische Substrat der Anordnung die notwendige mechanische Stabilität verleihen. Insbesondere kann eine Folie oder Kunststoffschale kostengünstig hergestellt werden. Indem das zweite optische Substrat auf der Rückfläche des ersten optischen Substrats angeordnet ist, kann es vor Beschädigungen wie Verkratzen geschützt sein.

In einer Ausführungsform des ophthalmologisches optischen Elements kann eine Kittschicht oder ein Luftspalt zwischen dem ersten optischen Substrat und dem zweiten optische Substrat vorgesehen sein. Allgemein gesprochen kann sich zwischen dem ersten optischen Substrat und dem zweiten optischen Substrat ein Medium mit anderem Brechungsindex befinden.

Vorzugsweise können das erste optische Substrat und das zweite optische Substrat miteinander verkittet werden. Bei dem Verkitten werden benachbarte Flächen, im vorliegenden Fall beispielsweise eine Rückfläche des ersten optischen Substrats und eine Vorderfläche des zweiten optischen Substrats, mittels einer dünnen, durchsichtigen Kittschicht zusammengeklebt. Beispielsweise kann hierzu ein Kunstharz verwendet werden. Des Weiteren kann grundsätzlich vorgesehen sein, dass das erste optische Substrat und das zweite optische Substrat durch Ansprengen verbunden werden. Diese Fertigungsart wird auch als Anschieben bezeichnet. Hierbei werden die Oberflächen durch molekulare Anziehungskräfte miteinander verbunden.

In einer Ausführungsform können das erste und/oder zweite diffraktive optische Element durch Laserstrahlschreiben, Stempeln, holographische Belichtung, und/oder Photolithographie hergestellt werden.

Auf diese Weise ist es möglich entsprechend den Anforderungen beispielsweise durch Stempeln ein kostengünstiges erstes und/oder zweites DOE bereitzustellen. Alternativ oder zusätzlich können beispielsweise durch holographische Belichtung und/oder photolithographische Prozesse auch komplexe DOEs realisiert werden.

In einer Ausführungsform des ophthalmologischen optischen Elements kann das erste und/oder zweite diffraktive optische Element rotationssymmetrisch zu einer optischen Achse sein.

Ein Vorteil dieser Ausführungsform besteht in einer kostengünstigen Herstellung. Das erste und/oder zweite DOE kann mit einer rotationssymmetrischen Phasenfunktion und optional gleichem Koordinatenursprung versehen sein. Ebenso können im Falle einer holographischen Belichtung die DOEs als holographisch-optische Elemente (HOEs) ausgeführt sein, welche optional axialsymmetrisch belichtet werden und den gleichen Ursprung besitzen. Herstellungstechnisch können HOEs unabhängig und nacheinander vorzugsweise auf entsprechend dünnen Kunststoffschalten belichtet und dann auf das erste diffraktive optische Element aufgeklebt werden. Auch ein Anbringen mittels Abstandshaltern ist möglich, falls statt beispielsweise einer Kittschicht ein Luftspalt verwendet wird.

In einer Ausführungsform kann das erste und/oder zweite DOE in der Querschnittsebene durch ein Polynom zweiter oder höherer Ordnung beschrieben werden. Insbesondere kann beispielsweise ein Polynom in dritter oder vierter Ordnung vorgesehen sein. Ein Polynom dritter Ordnung kann beispielsweise in der Form $P(y) = A|y|^3 + B|y|^2 + C|y| + D$ gebildet sein, wobei A, B, C und D Konstanten sind.

Die Koeffizienten des Polynoms können mittels eines Raytracing-Verfahrens optimiert werden. Derartige Raytracing-Verfahren sind dem Durchschnittsfachmann grundsätzlich bekannt. Sie sind beispielsweise in "Robert R. Shannon, The Art and Science of Optical Design, Cambridge University Press, 1997" beschrieben. Auf diese Weise ist es möglich, ein ophthalmologisches optisches Element zumindest näherungsweise zunächst gemäß dem zweiten Aspekt der vorliegenden Offenbarung auszulegen und das Design weiter zu optimieren. Dabei kann der Schritt des Optimierens insbesondere aufgrund der zunächst zumindest näherungsweise gefundenen Lösungen deutlich schneller ausgeführt werden. Des Weiteren können so Ressourcen einer hierzu verwendeten Datenverarbeitungseinrichtung eingespart werden.

Vorzugsweise können das erste und zweite diffraktive optische Element (21,22) in einer Querschnittsebene jeweils durch ein Phasenpolynom zweiter oder höherer Ordnung beschrieben werden, wobei zwischen einem ersten Koeffizienten $a_{1,DOE1}$ des Phasenpolynoms des ersten diffraktiven optischen Elements und einem ersten Koeffizienten $a_{1,DOE2}$ des Phasenpolynoms des zweiten diffraktiven optischen Elements mit einem Toleranzbereich von $\pm20\%$, insbesondere $\pm10\%$, insbesondere $\pm5\%$, folgende Beziehung gilt:

$$(2) \qquad \left| \frac{a_{1,DOE1}}{a_{1,DOE1} + a_{1DOE2}} \right| = \frac{20}{\sqrt{D}\sqrt{d}} \, ,$$

wobei D eine resultierende zusätzliche optische Brechkraft durch das erste und zweite diffraktive optische Element angibt, und d einen Abstand des ersten und zweiten diffraktiven optischen Elements. Entsprechend der entgegengesetzten Vorzeichen der zweiten und dritten Brechkraft des ersten und zweiten diffraktiven optischen Elements, können die Koeffizienten $a_{1,DOE1}$ und $a_{1,DOE2}$ des ersten und zweiten diffraktiven optischen Elements unterschiedliche Vorzeichen haben. Ferner kann, ebenfalls mit den vorstehend genannten Toleranzen, folgende Beziehung gelten:

$$(3) \qquad a_{1,DOE1} - a_{1DOE2} = \frac{D}{1000}$$

wobei $\lambda_0$ eine Designwellenlänge von beispielsweise 546nm angibt.

In einer Ausführungsform kann das ophthalmologische optische Element ferner eine astigmatische Wirkung und/oder eine unterschiedlich fokussierende Wirkung in Nah- und Fernteil aufweisen.

Es kann allgemein eine Zusatzkorrektionswirkung vorgesehen sein, insbesondere Astigmatismuskorrektur und/oder Gleitsicht- bzw. Nahbereichskorrektur. Diese Wirkung kann durch das erste refraktive optische Element und/oder durch das erste und/oder zweite DOE oder eine beliebige Kombination daraus erzielt werden. Insbesondere kann eine Zusatzkorrekturwirkung vorteilhaft bei Herstellung eines DOEs mittels holographischer Belichtung mit beispielsweise deformierten Wellenfronten erfolgen. Ferner kann beispielsweise durch Einbringen einer Zylinderoptik eine Astigmatismuskorrektur inklusive des notwendigen Drehwinkels bereitgestellt werden.

In einer Ausführungsform kann das Verfahren gemäß dem zweiten Aspekt der vorliegenden Erfindung ferner dadurch gekennzeichnet sein, dass die Auswahl des ersten optischen Substrats aus einem Satz von vorgegebenen ersten optischen Substraten erfolgt. Dabei kann jedes der vorgegebenen optischen Substrate als Basis für einen zu korrigierenden Dioptrienbereich fungieren. Beispielsweise weist der Satz von vorgegebenen ersten optischen Substraten wenigstens einen der folgenden Dioptrienbereiche auf 0...+5dptr, 0...-5dptr, +5...+8dptr und -5...-8dptr.

Ein Vorteil dieser Ausgestaltung besteht darin, dass nur eine begrenzte Anzahl an ersten optischen Substraten vorgehalten werden muss. Dies ist insbesondere vorteilhaft bei einer kopfgetragenen Anzeigevorrichtung, gemäß dem sechsten Aspekt, wie weiter unten noch erläutert wird.

Die Gitterfrequenzen, die zur Gewährleistung der notwendigen optischen Funktionen erreichen werden müssen, sind umso größer, je weiter eine gewünschte Dioptrienzahl für einen Nutzer von einer eingangs gewählten Dioptrienzahl des ersten refraktiven optischen Elements entfernt liegt. Um eine zu große Spreizung zu vermeiden kann es sich daher empfehlen, einen Satz von vorgegebenen optischen Substraten bereitzustellen, welche jeweils einen Teil eines größeren Bereichs abdecken.

In einer Weiterbildung der Ausführungsform kann ein Substrat des Satzes von vorgegebenen ersten optischen Substraten beispielsweise als Basis für einen Dioptrienbereich von wenigstens 2, insbesondere wenigstens 3, insbesondere wenigstens 4 Dioptrien fungiert. Die Dioptrienbereiche können einander überlappen.

Gemäß einem sechsten Aspekt der Erfindung wird eine kopfgetragene Anzeigevorrichtung (Head-Mounted Display bzw. HMD) mit einem ophthalmologischen optischen Element gemäß dem ersten Aspekt der vorliegenden Erfindung vorgeschlagen, wobei das ophthalmologische optische Element ferner eine Einkopplungsoptik aufweist, welche dazu ausgebildet ist, ein anzuzeigendes Bild mittels des ersten optischen Substrats des ophthalmologischen optischen Elements einzukoppeln.

Unter einer kopfgetragenen Anzeigevorrichtung oder einem Head-Mounted Display, kurz HMD, ist ein auf dem Kopf getragenes bzw. tragbares visuelles Ausgabegerät zu verstehen. Insbesondere kann es sich um ein sogenanntes OHMD handeln, welches es dem Nutzer ermöglicht durch die Anzeige hindurchzusehen. Derartige Vorrichtungen sind insbesondere bei Anwendungen der erweiterten Realität, auch als "augmented reality" bezeichnet, vorteilhaft. Ein HMD kann Bilder insbesondere auf einem augennahen Bildschirm präsentieren oder projiziert sie direkt auf die Netzhaut.

Vorzugsweise ist das erste optische Substrat dazu ausgebildet, Licht des anzuzeigenden Bildes durch Totalreflektion im ersten optischen Substrat zu führen und weist ferner eine Combineroptik als Einkopplungsoptik auf, welche bei bestimmungsgemäßem Einsatz von der Auge zum liegen kommt.

Bei HMDs besteht normalerweise das Problem, dass bei unterschiedlichen Dioptrienanforderungen jeweils eine neue HMD-Einkopplungsoptik gerechnet werden müsste oder eine Kombination mit einem normalen Brillenglas einer Rezeptbrille verwendet werden müsste. Somit ist entweder ein hoher Aufwand erforderlich oder es kommt ein sandwichartiger Aufbau zum Einsatz, welcher die Gesamtbrille sehr dick machen würde.

Gemäß der vorgeschlagenen Lösung kann für einen gesamten Dioptrienbereich bzw. Teilbereich ein standardisiertes erstes refraktives optisches Element verwendet werden, welches eine HMD-Einkopplungs bzw. Auskopplungsoptik aufweist. Eine Individualisierung kann dadurch erfolgen, dass auf der Seite der Rückfläche des ersten optischen Elements ein erstes und zweites DOE, wie vorstehen beschrieben, vorgesehen sind. Dadurch wirken die DOEs sowohl für den Durchlicht- als auch für den Einspiegelungskanal, sodass das gleiche HMD bzw. das gleiche erste optische Element für eine Mehrzahl von Sehstärken verwendet werden kann. Dadurch können die Herstellung vereinfacht und die Kosten gesenkt werden.

In einer Ausführungsform kann das ophthalmologische optische Element eine Einkopplungsoptik und/oder Auskopplungsoptik für ein HMD aufweisen, welche dazu ausgebildet ist, ein anzuzeigendes Bild mittels des ersten optischen Substrats des ophthalmologischen optischen Elements einzukoppeln und/oder auszukoppeln

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:

Fig. 1    eine Schnittdarstellung eines ophthalmologischen optischen Elements gemäß einer ersten Ausführungsform;

Fig. 2    eine Schnittdarstellung eines ophthalmologischen optischen Elements gemäß einer zweiten Ausführungsform;

Fig. 3    eine Draufsicht eines ophthalmologischen optischen Elements gemäß einer weiteren Ausführungsform;

Fig. 4    eine schematische Darstellung einer kopfgetragenen Anzeigevorrichtung (HMD) mit einem ophthalmologischen optischen Elements ähnlich der ersten Ausführungsform aus Fig. 1;

Fig. 5    ein Flussdiagram eines Verfahrens zum Auslegen eines ophthalmologischen optischen Elements;

Fig. 6    ein weiteres Flussdiagram eines Verfahrens zum Auslegen eines ophthalmologischen optischen Elements;

Fig. 7    eine Darstellung eines Farbquerfehlers bei einem ophthalmologischen optischen Element gemäß einem Aspekt der vorliegenden Erfindung;

Fig. 8    eine Darstellung eines Farbquerfehlers bei einem konventionellen Brillenglas;

Fig. 9    eine weitere Darstellung eines Farbquerfehlers bei einem ophthalmologischen optischen Element gemäß einem Aspekt der vorliegenden Erfindung;

Fig. 10    eine weitere Darstellung eines Farbquerfehlers bei einem konventionellen sphärischen Brillenglas;

Fig. 11    eine Darstellung einer MTF bei einem ophthalmologischen optischen Element gemäß einem Aspekt der vorliegenden Erfindung;

Fig. 12    eine Darstellung einer MTF bei einem konventionellen Brillenglas mit sphärischem Innenradius; und

Fig. 13    eine Darstellung einer MTF bei einem konventionellen Brillenglas mit Freiforminnenfläche.

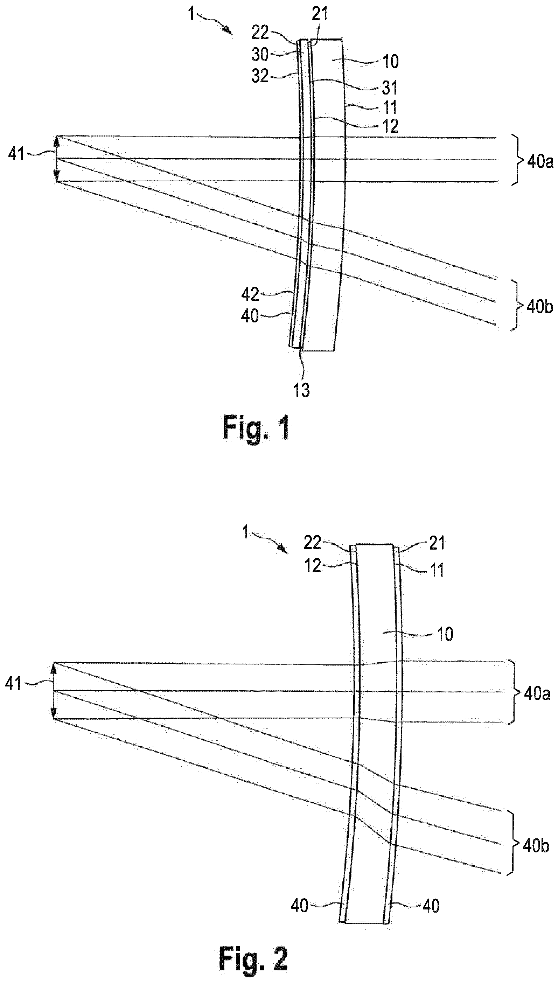

Fig. 1 zeigt eine Schnittdarstellung eines ophthalmologischen optischen Elements 1 gemäß einer ersten Ausführungsform, beispielsweise ein Brillenglas. Das ophthalmologische optische Element 1 weist ein erstes refraktives optisches Substrat 10 auf, welches eine positive oder negative erste optische Brechkraft aufweist, ein erstes diffraktives optischen Element (DOE) 21, welches eine zweite optische Brechkraft aufweist, und ein zweites diffraktives optisches Element 22, welches eine dritte optische Brechkraft aufweist, wobei das erste diffraktive optische Element 21 und das zweite diffraktive optische Element 22 eine entgegengesetzte optische Brechkraft aufweisen und wobei das erste diffraktive optische Element 21 und das zweite diffraktive optische Element 22 zumindest teilweise achromatisch zusammenwirken. Das erste diffraktive optische Element 21 und das zweite diffraktive optische Element 22 können eine etwa betragsmäßig gleiche Brechkraft aufweisen, aber mit unterschiedlichem Vorzeichen, so dass das erste diffraktive optische Element 21 und das zweite diffraktive optische Element 22 zumindest teilweise achromatisch zusammenwirken.

Fig. 1 zeigt eine bevorzugte Ausführungsform, bei welcher eine objektseitige Vorderfläche 11 des ersten optischen Substrats 10 aus ästhetischen Gründen konvex ausgeführt ist. Vorzugsweise ist eine augenseitigen Rückfläche 12 des ersten optischen Substrats 10, ebenfalls aus ästhetischen Gründen, konkav ausgeführt. Die Brechkraft des ersten refraktiven optischen Substrats 10 ergibt sich insbesondere aus den Radien der Vorderfläche 11, der Rückfläche 12 und einer Dicke des Substrats 10.

In der in Fig. 1 gezeigten Ausführungsform ist ein zweites optisches Substrat 30 an der Rückfläche 12 des ersten optischen Substrats 10 angeordnet. Das zweite optische Substrat 30 weist dabei an einer objektseitigen Vorderfläche 31 das erste diffraktive optische Element 21 und an einer augenseitigen Rückfläche 32 das zweite diffraktive optische Element 22 auf. Alternativ kann das zweite diffraktive optische Element 22 auch an der Rückfläche 12 des ersten optischen Substrats 10 angeordnet sein.

Das zweite optische Substrat 30 kann beispielsweise eine Kunststoffschale oder Folie sein, beispielsweise eine Gitterfolie mit einem vorderseitigen, ersten Beugungsgitter für das erste diffraktive optische Element 21 und einem rückseitigen, zweiten Beugungsgitter für das zweite diffraktive optische Element 22.

Das zweite optische Substrat 30 kann mit dem ersten optischen Substrat 10 verklebt bzw. verkittet werden. Auch ein Anbringen mittels Abstandshaltern ist möglich, falls statt beispielsweise einer Kittschicht ein Luftspalt verwendet wird. Hierfür befindet sich in dem in Fig. 1 gezeigten Beispiel ein Luftspalt bzw. eine Kittschicht 13 zwischen der Rückfläche 12 des ersten optischen Substrats 10 und der Vorderfläche 31 des zweiten optischen Substrats 30. Der Luftspalt bzw. die Kittschicht 13 kann einen Brechungsindex aufweisen, welcher sich von dem ersten und/oder zweiten optischen Substrat 10, 30 unterscheidet.

Auf der Rückfläche 32 des zweiten optischen Substrats 30 kann optional eine Schutzschicht 40 vorgesehen sein, welche insbesondere das zweite DOE 22 beispielsweise vor mechanischer Beschädigung schützt. Die Schutzschicht 40 weist einen Brechungsindex auf, welcher sich von dem zweiten optischen Substrat 30 unterscheidet. Optional kann an der Vorderfläche 11 des ersten optischen Substrats 10 eine Schutzschicht vorgesehen sein.

In Fig. 1 sind ferner beispielhaft aus dem Unendlichen einfallenden Strahlenbündel 40a, 40b dargestellt, welche einer Eintrittspupille 41 eines Auges eines Nutzers durch das ophthalmologische optische Element 1 zugeführt werden.

In einem konkreten Ausführungsbeispiel kann das erste optische Element 1 für einen Dioptrienbereich von 0 bis -4 dptr, einen Pupillendurchmesser von 3 mm und ein Sehfeld von +/- 25 Grad ausgelegt sein. Für eine kostengünstige Fertigung können eine oder mehrere Vorder- und/oder Rückflächen sphärisch ausgestaltet sein. In diesem Beispiel bezeichnet R1 einen Radius einer Rückfläche 42 der Schutzschicht 40, R2 den Radius der Rückfläche 32 des zweiten optischen Elements 30, R3 den Radius der Vorderfläche 31 des zweiten optischen Elements, R4 den Radius der Rückfläche 12 des ersten optischen Elements 10 und R5 den Radius der Vorderfläche 11 des ersten optischen Elements 10. In diesem Beispiel bezeichnet D1 eine Dicke der Schutzschicht 40, D2 eine Dicke des zweiten optischen Elements 30, D3 eine Dicke der Kittschicht 13 und D4 eine Dicke des ersten optischen Elements 10. Die Werte erste optische Element 1 gemäß diesem Ausführungsbeispiel können wie folgt gewählt werden:

$$R1 = 112.17 \text{ mm (cc)} \qquad D1 = 0.1 \text{ mm}$$
$$R2 = 112.27 \text{ mm (cc)} \qquad D2 = 0.25 \text{ mm}$$
$$R3 = 112.57 \text{ mm (cc)} \qquad D3 = 0.1 \text{ mm}$$
$$R4 = 112.67 \text{ mm (cc)} \qquad D4 = 2.0 \text{ mm}$$
$$R5 = 120.00 \text{ mm (cc)}$$

Die Angabe "cc" weist dabei darauf hin, dass es sich jeweils um eine konkave Fläche handeln kann. Damit kann eine ansprechende Ästhetik erreicht werden.

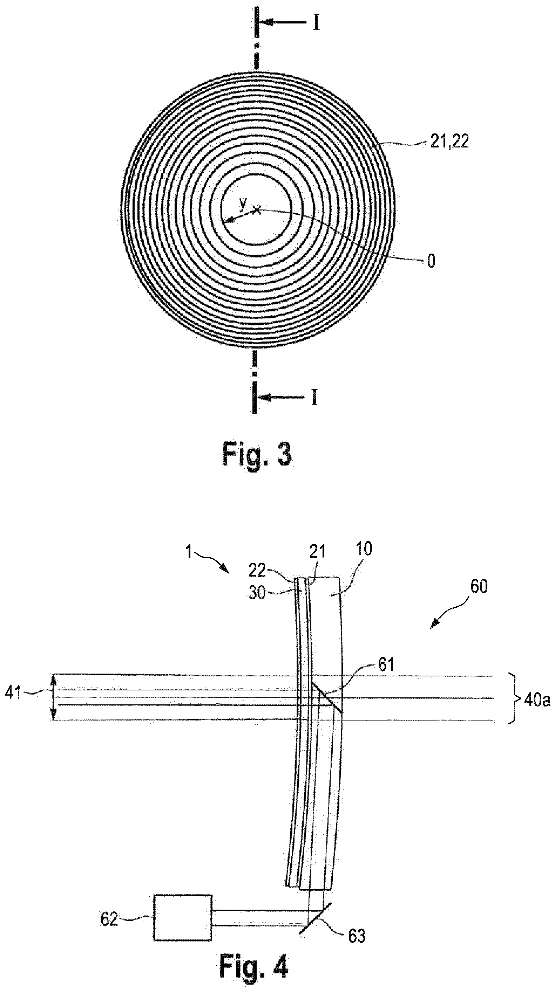

Das erste und/oder zweite diffraktive optische Element 21, 22 können kann mit einer rotationssymmetrischen Phasenfunktion und optional gleichem Koordinatenursprung versehen sein. Eine derartige Struktur ist beispielhaft in der Draufsicht in Fig. 3 gezeigt. Der Schnitt I-I bezeichnet dabei die Querschnittsebene gemäß Fig. 1.

In diesem Ausführungsbeispiel kann für das erste DOE 21 und für das zweite DOE 22 ein Phasenpolynom sechster Ordnung gewählt werden. Im vorliegenden Beispiel sind vorzugsweise lediglich die geraden Terme berücksichtigt mit:

$$(4) \qquad P(y) := \sum_{i=1}^{N} \frac{a_i y^{2i}}{\lambda_H} \text{ mit i=1...N und N=3,}$$

wobei y eine radiale Höhe auf dem DOE, also einen Radialabstand vom Zentrum (siehe 0 in Fig. 3) angibt und $\lambda_H$ eine Designwellenlänge, hier beispielsweise $\lambda_H$ = 546 nm. Die Koeffizienten $a_i$ können entsprechend einem gewünschten Dioptrienwert gewählt werden. Die Designwellenlänge $\lambda_H$ kann optional bereits in den Koeffizienten $a_i$ enthalten sein. In den nachfolgend beispielhaft angegebenen Koeffizientensätzen ist die Designwellenlänge $\lambda_H$ bereits in den Koeffizienten $a_i$ enthalten.

Ein Vorteil dieser Lösung besteht also insbesondere darin, dass das gleiche erste refraktive optische Element 10 als Basis für mehrere gewünschte Dioptrienwerte für unterschiedliche Nutzer dienen kann. Dadurch kann die Herstellung des ersten optischen Elements standardisiert werden, wodurch die Herstellungskosten gesenkt werden können. Eine Anpassung an einen gewünschten Dioptrienwert eines Nutzers kann über die Wahl der Koeffizienten $a_i$ des Phasenpolynoms des ersten und zweiten DOEs 21, 22 erfolgen. Im vorliegenden Beispiel können folgende Koeffizientensätze gewählt werden:

Koeffizientensatz bei -1dptr

| Koeffizient | DOE1 | DOE2 |
|---|---|---|
| a1 | -0.4274E-01 | 0.4363E-01 |
| a2 | -0.2732E-04 | 0.2791E-04 |
| a3 | 0.2187E-06 | -0.2270E-06 |

Koeffizientensatz bei -2dptr

| Koeffizient | DOE1 | DOE2 |
|---|---|---|
| a1 | 0.3751E-01 | -0.3616E-01 |
| a2 | -0.7081E-04 | 0.6560E-04 |
| a3 | 0.2261E-06 | -0.2001E-06 |

Koeffizientensatz bei -3dptr

| Koeffizient | DOE1 | DOE2 |
|---|---|---|
| a1 | 0.4882E-01 | -0.4671E-01 |
| a2 | -0.1107E-03 | 0.1015E-03 |
| a3 | 0.3310E-06 | -0.2871E-06 |

Koeffizientensatz bei -4dptr

| Koeffizient | DOE1 | DOE2 |
|---|---|---|
| a1 | 0.6123E-01 | -0.5808E-01 |
| a2 | -0.1668E-03 | 0.1512E-03 |
| a3 | 0.4874E-06 | -0.4139E-06 |

Im vorliegenden Beispiel sind das erste optische Substrat 10 und zweite optische Substrat 30 aus einem ersten transparenten Material, hier Polycarbonat, hergestellt. Die Kittschicht 13 und Schutzschicht 40 sind aus einem zweiten transparenten Material hergestellt, hier PMMA, welches einen anderen Brechungsindex aufweist. Polycarbonat kann einen Brechungsindex $n_1$=1.49 und PMMA einen Brechungsindex $n_2$=1.6 aufweisen.

Es versteht sich, dass die jeweiligen numerischen Werte, also Radien der jeweiligen Flächen und/oder Koeffizienten des ersten und zweiten DOEs 21, 22 computergestützt durch optische Simulation bzw. Optimierung für einen jeweiligen gewünschten Dioptrienwert und eine gewünschte Geometrie erhalten werden können.

Gemäß einem Aspekt der vorliegenden Offenbarung erfolgt die Auslegung des ersten DOEs 21 und des zweiten DOEs 22 unter der Randbedingung, dass der Betrag einer Summe der zweiten optischen Brechkraft des ersten diffraktiven optischen Elements 21 und der dritten optischen Brechkraft des zweiten diffraktiven optischen Elements 22 geteilt durch einen Betrag einer Differenz der zweiten optischen Brechkraft und der dritten optischen Brechkraft kleiner als 1/10, insbesondere kleiner als 1/15, insbesondere kleiner als 1/20 ist. Indem die zweite und dritte Brechkraft derart etwa betragsmäßig gleich gewählt werden und diese unterschiedliche Vorzeichen besitzen, kann insbesondere ein geringer Farbquerfehler erreicht werden. Dieser auch in Gleichung (1) angegebene Quotient kann als Kontrast bzw. Kontrastwert K bezeichnet werden.

Für eine durch die Kombination von erstem und zweitem DOE 21, 22 zusätzliche zu korrigierende Dioptrienzahl D und einen Abstand des ersten und zweiten DOEs d sind nachfolgend beispielhafte Kontrastwerte K angegeben:

| D [dptr] | d [mm] | $K = \dfrac{\lvert D2 + D3 \rvert}{\lvert D2 - D3 \rvert}$ |
|---|---|---|
| 1 | 0.5 | 54.7 |
| 1 | 1.0 | 38.9 |
| 1 | 1.5 | 31.8 |
| 2 | 0.5 | 38.5 |
| 2 | 1.0 | 27.4 |
| 2 | 1.5 | 22.5 |
| 3 | 0.5 | 31.3 |
| 3 | 1.0 | 22.3 |
| 3 | 1.5 | 18.3 |
| 4 | 0.5 | 26.9 |
| 4 | 1.0 | 19.2 |
| 4 | 1.5 | 15.8 |

Bei gleicher Dioptrienzahl verhalten sich die Kontrastwerte bei unterschiedlichen Abständen der DOEs vorzugsweise proportional zu $\sqrt{d1/d2}$, wobei d1 und d2 die Abstände der DOEs voneinander angeben. Ein Abstand der DOEs kann als Abstand der DOEs entlang der optischen Achse definiert werden.

Wie eingangs beschrieben sind die Gitterfrequenzen, die zur Gewährleistung einer optischen Wirkung, wie einer gewünschten Brechkraft, durch ein diffraktives optisches Element erreicht werden müssen umso größer, je betragsmäßig größer die gewünschte zusätzliche Wirkung der Kombination des ersten und zweiten DOEs 21, 22 ist. Eine hohe Gitterfrequenz und die damit verbundenen kleinen Strukturgrößen können jedoch die Anforderungen an die Herstellung erhöhen. Es empfiehlt sich daher einen abzudeckenden Dioptrienbereich, beispielsweise von -8 dptr bis + 8 dptr in mehrere Dioptrienbereiche zu unterteilen. Beispielsweise in die Bereiche -8 dptr...-4 dptr, -4 dptr...0 dptr, 0 dptr...+4 dptr, 4dptr...8 dptr. Die endgültige Anpassung auf den Wert des Nutzers kann dann mittels des ersten und zweiten DOEs erfolgen.

In der Fig. 2 ist schematische eine Schnittdarstellung einer weiteren möglichen Ausführungsform eines ophthalmologischen optischen Elements 1 dargestellt. Die gleichen Elemente sind wiederum mit gleichen Bezugszeichen gekennzeichnet und werden nicht erneut beschrieben. Im Folgenden wird lediglich auf die Unterschiede eingegangen.

In der in Fig. 2 gezeigten Ausführungsform ist das erste DOE 21 an einer objektseitigen Vorderfläche 11 des ersten refraktiven optischen Substrats 10 angeordnet. Das zweite DOE 22 kann an einer augenseitigen Rückfläche 12 des ersten refraktiven optischen Substrats 10 angeordnet sein. Vorzugsweise kann eine Schutzschicht 40 vorgesehen sein, welche das erste und/oder zweite DOE 21, 22 schützt.

Fig. 4 zeigt eine vereinfachte schematische Darstellung einer kopfgetragenen Anzeigevorrichtung (HMD) 60 mit einer Weiterbildung eines ophthalmologischen optischen Elements 1 gemäß einem Aspekt der vorliegenden Erfindung, wie unter Bezugnahme auf Fig. 1 beschrieben.

Das ophthalmologische optische Element 1 weist ferner eine Einkopplungsoptik 61 auf, welche dazu ausgebildet ist, ein anzuzeigendes Bild mittels des ersten optischen Substrats 10 des ophthalmologischen optischen Elements 1 einzukoppeln.

Das HMD 60 weist ferner eine Bildquelle 62 auf welche ein anzuzeigendes Bild bereitstellt. Das anzuzeigende Bild kann, optional über ein weiteres Element 63, in das erste optische Substrat 10 eingekoppelt werden.

In dem in Fig. 4 gezeigten Beispiel sind die Komponenten des HMDs stark vereinfacht dargestellt. Beispielsweise wird das anzuzeigende Bild von der Bildquelle 62 über einen ersten Spiegel 63 in das erste optische Substrat 10 eingekoppelt und über einen zweiten Spiegel 61 aus dem optischen Substrat ausgekoppelt bzw. in den Strahlengang zum Auge eingekoppelt. Vorzugsweise kann es sich bei dem Spiegel 61 um einen halbdurchlässigen Spiegel handeln, sodass der Nutzer auch weiterhin Licht 40a aus seiner Umgebung wahrnehmen kann. Dies ist besonders Vorteilhaft für Anwendungen der erweiterten Realität (augmented reality).

Bei dem HMD können auch diffraktive Ein- bzw. Auskoppelstrukturen eingesetzt werden, wie beispielsweise in Levola, "Diffractive optics for virtual reality displays", Journal of the Society for Information Display, Volume 14, Issue 5, pages 467-475, May 2006, beschrieben.

Ein Vorteil dieser Ausführungsform besteht darin, dass für mehrere unterschiedliche Dioptrienwerte das gleiche erste optische Substrat 10 verwendet werden kann. Eine endgültige Dioptrienanpassung kann durch das erste und zweite DOE 21,22, welche auf der Seite einer Rückfläche 12 des ersten optischen Substrats 10 angeordnet sind, erfolgen. Hierfür kann ein zweites optisches Substrat 30 vorgesehen sein, wie unter Bezugnahme auf Fig. 1 beschrieben.

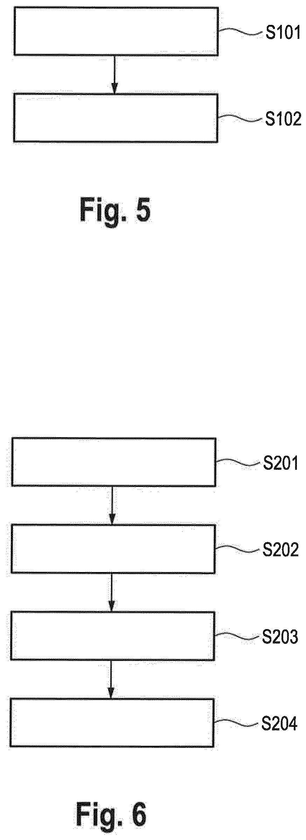

Fig. 5 zeigt ein Flussdiagram eines computerimplementierten Verfahrens zum Auslegen eines ophthalmologischen optischen Elements 1, insbesondere Brillenglases, für einen Nutzer, wobei das ophthalmologische optische Element ein erstes optisches Substrat, welches eine positive oder negative erste optische Brechkraft aufweist; ein erstes diffraktives optischen Element, welches eine zweite optische Brechkraft aufweist; und ein zweites diffraktives optisches Element, welches eine dritte optische Brechkraft aufweist; aufweist, wobei das erste diffraktive optische Element und das zweite diffraktive optische Element eine entgegengesetzte optische Brechkraft aufweisen und wobei das erste diffraktive optische Element und das zweite diffraktive optische Element vorzugsweise zumindest teilweise achromatisch zusammenwirken.

In einem ersten Schritt S101 wird ein erstes optisches Substrat, welches eine positive oder negative erste optische Brechkraft aufweist, gemäß einem zu korrigierenden Dioptrienbereich ausgewählt. Die Auswahl des ersten optischen Substrats kann aus einem Satz von vorgegebenen ersten optischen Substraten erfolgen, wobei jedes der vorgegebenen optischen Substrate als Basis für einen zu korrigierenden Dioptrienbereich fungiert. Beispielsweise ist für den Nutzer eine Korrekturwirkung von -3 dptr erforderlich. Somit kann ein erstes optisches Substrat, welches für einen zu korrigierenden Dioptrienbereich von -4 dptr bis 0 dptr ausgelegt ist, ausgewählt werden.

In einem zweiten Schritt S102 werden das erste diffraktive optischen Element, welches die zweite optische Brechkraft aufweist, und das zweite diffraktive optischen Element, welches die dritte optische Brechkraft aufweist, ausgewählt.

Das erste und zweite diffraktive optische Element werden vorzugsweise derart ausgewählt, dass ein Betrag einer Summe der zweiten optischen Brechkraft des ersten diffraktiven optischen Elements und der dritten optischen Brechkraft des zweiten diffraktiven optischen Elements geteilt durch einen Betrag einer Differenz der zweiten optischen Brechkraft und der dritten optischen Brechkraft kleiner als 1/10, insbesondere kleiner als 1/15, insbesondere kleiner als 1/20 ist.

Fig. 6 zeigt ein weiteres Flussdiagram eines Verfahrens zum Auslegen eines ophthalmologischen optischen Elements. Mit einem derartigen Verfahren kann vorzugsweise aus wenigen, leicht herstellbaren und optischen ansprechenden Grundformen des ersten optischen Substrats eine jeweils notwendige Dioptrienzahl bzw. optional eine speziell optimierte Fehlsichtigkeitskorrektur ermöglicht werden.

In einem ersten Schritt S201 wird ein mit einem gleichen ersten refraktiven optischen Substrat, hierbei auch als Trägerglas bezeichnet, zu korrigierender Dioptrienbereich ausgewählt, beispielsweise von -4 dptr bis 0 dptr oder von +4 dptr bis +7 dptr.

In einem zweiten Schritt S202 können ein Radius der Vorderfläche 11 und ein Radius der Rückfläche 12 des ersten refraktiven optischen Substrats 10 nach konventioneller Methodik für beispielsweise eine mittlere Dioptrienzahl aus diesem Dioptrienbereich optimiert. Damit wird die erste optische Brechkraft des ersten refraktiven optischen Substrats 10 festgelegt. Vorzugsweise sind die Vorderfläche 11 und die Rückfläche 12 sphärisch. Ein Vorteil ist die einfache, kostengünstige Herstellung mit hoher Qualität.

In einem dritten Schritt S203 werden ein erstes diffraktives optisches Element (DOE) 21 mit einer zweiten Brechkraft und ein zweites diffraktives optisches Element 22 mit einer zweiten Brechkraft bereitgestellt, wobei insbesondere folgende Möglichkeiten bestehen: (a) Ein DOE wird auf der Vorderfläche des ersten optischen Substrats 10 aufgebracht und das andere DOE wird auf der Rückfläche des ersten optischen Substrats 10 aufgebracht, wie beispielsweise in Fig. 2 gezeigt. (b) Es wird ein zweites optisches Substrat vorgesehen, wobei ein DOE auf der Vorderfläche des zweiten optischen Substrats aufgebracht ist und das andere DOE auf der Rückfläche des zweiten optischen Substrats aufgebracht ist, wie beispielsweise in Fig. 1 gezeigt. (c) Es kann eine Mischform gewählt werden, wobei ein DOE auf einer Vorder- oder Rückfläche des ersten optischen Substrats aufgebracht ist und das andere DOE auf einer Vorder- oder Rückfläche des zweiten optischen Substrats aufgebracht ist.

Das erste und zweite DOE 21, 22 werden dabei so ausgewählt, dass sie für die entsprechende Dioptrienanforderung eine in etwa betragsmäßig gleiche optische Brechtkraft, aber mit unterschiedlichem Vorzeichen besitzen. Wie eingangs beschrieben ergibt sich die resultierende Brechkraft des ophthalmologischen optischen Elements 1 insbesondere aus der Summe der ersten, zweiten und dritten Brechkraft.

In einem vierten Schritt S204 kann eine simultane Optimierung für mehrere Stützstellen, also mehrere gewünschte Dioptrienwerte, aus dem zu korrigierenden Dioptrienbereich, z.B. -4 dptr bis 0 dptr, durchgeführt werden, in der die Koeffizienten der DOEs 21, 22 zusammen mit dem vorgegebenen ersten optischen Substrat aus Schritt S202 optimiert werden.

Vorzugsweise kann bei dieser Optimierung der Radius der Vorderfläche 11 des ersten refraktiven optischen Substrats 10 konstant gehalten werden, wohingegen insbesondere der Radius der Rückfläche 12 des ersten optischen Substrats 10 und ggf. die Radien des optionalen zweiten optischen Substrats 30 sowie Abstände der DOEs innerhalb erlaubter Grenzen optimiert werden. Dadurch kann ein ansprechendes ästhetisches Design erreicht werden.

Computergestützte Optimierungsverfahren einschließlich Raytracing-Verfahren sind dem Durchschnittsfachmann grundsätzlich bekannt. Beispielsweise kann hierbei auf kommerziell verfügbare Produkte wie beispielsweise Code V oder Zemax zurückgegriffen werden. Entscheidend ist beim Einsatz derartiger Lösungen jedoch die Wahl der Randbedingungen, um zu einem vorteilhaften Ergebnis zu gelangen.

Insbesondere haben die Erfinder hierbei erkannt, dass ein geringer Farbquerfehler erreicht werden kann, wenn das erste und zweite diffraktive optische Element derart ausgewählt werden, dass ein Betrag einer Summe der zweiten optischen Brechkraft des ersten diffraktiven optischen Elements und der dritten optischen Brechkraft des zweiten diffraktiven optischen Elements geteilt durch einen Betrag einer Differenz der zweiten optischen Brechkraft und der dritten optischen Brechkraft kleiner als 1/10, insbesondere kleiner als 1/15, insbesondere kleiner als 1/20 ist.

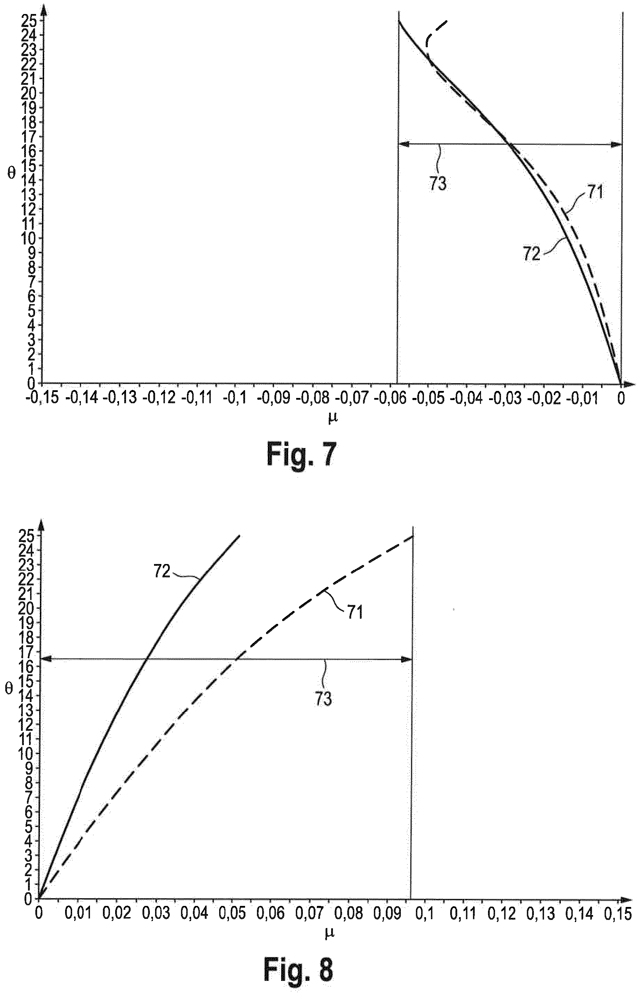

Die Fig. 7 bis Fig. 13 zeigen beispielhafte Simulationsergebnisse von ophthalmologischen optischen Elementen gemäß Aspekten der vorliegenden Erfindung im Vergleich zu konventionellen klassischen Brillengläsern.

Fig. 7 bis Fig. 10 zeigen Darstellungen eines Farbquerfehlers. Die horizontale Achse gibt den Farbquerfehler $\mu$ in Millimetern an. Die vertikale Achse gibt den Sehwinkel $\theta$ des Sehfeldes von 0° bis 25° an. Die Skalierung der Achsen ist in Fig. 7 bis Fig. 10 zur besseren Vergleichbarkeit identisch. Dabei ist der Farbfehler für langwelliges Licht, beispielswese bei einer Wellenlänge von 643 nm, jeweils durch eine gestrichelte Line 71 dargestellt. Ein Farbfehler für kurzwelliges Licht, beispielsweise bei 480nm, ist durch die durchgezogene Linie 72 dargestellt. Ein maximaler Farbfehler über den Winkelbereich von 0° bis 25° ist jeweils durch den Doppelpfeil 73 angegeben.

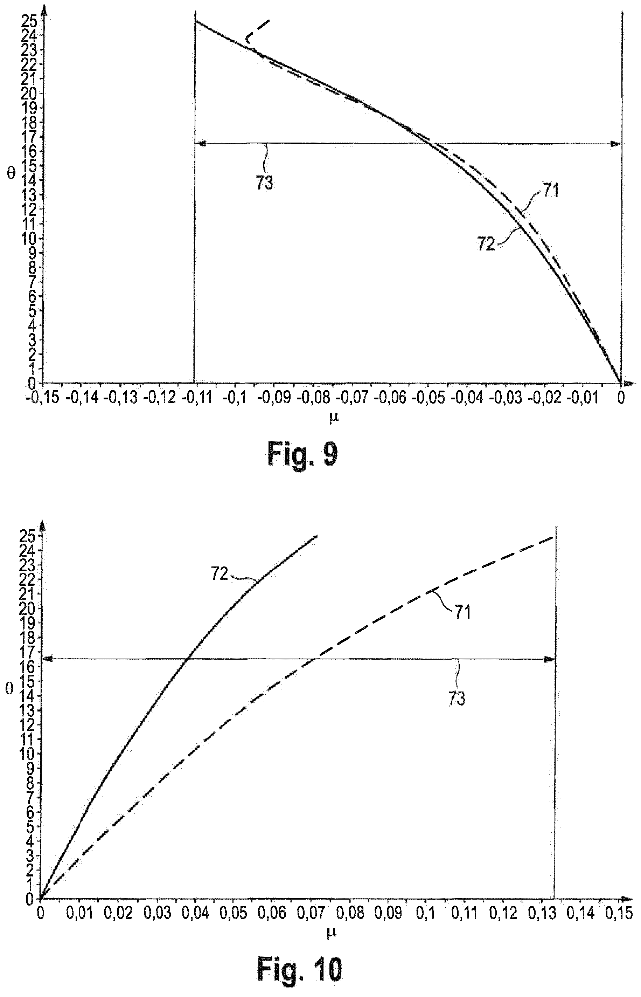

Fig. 7 und Fig. 8 zeigen den Farbquerfehler bei einer dioptrischen Wirkung von +3 dptr. Fig. 9 und Fig. 10 zeigen den Farbquerfehler bei einer dioptrischen Wirkung von +4 dptr.

Fig. 7 und Fig. 9 zeigen eine Darstellung eines Farbquerfehlers bei einem ophthalmologischen optischen Element gemäß einem Aspekt der vorliegenden Erfindung, wie beispielsweise in Fig. 1 dargestellt. Fig. 8 und Fig. 10 zeigen eine entsprechende Darstellung eines Farbquerfehlers für ein konventionelles sphärisches Brillenglas.

Wie aus dem Vergleich der Fig. 7 mit der Fig. 8 und dem Vergleich der Fig. 9 mit der Fig. 10 ersichtlich, kann der Farbfehler mit dem ophthalmologischen optischen Element 1 gemäß einem Aspekt der vorliegenden Erfindung vorteilhaft reduziert werden. Insbesondere kann mit der vorgeschlagenen Lösung somit eine bessere optische Performance auch am Bildfeldrand erreicht werden.

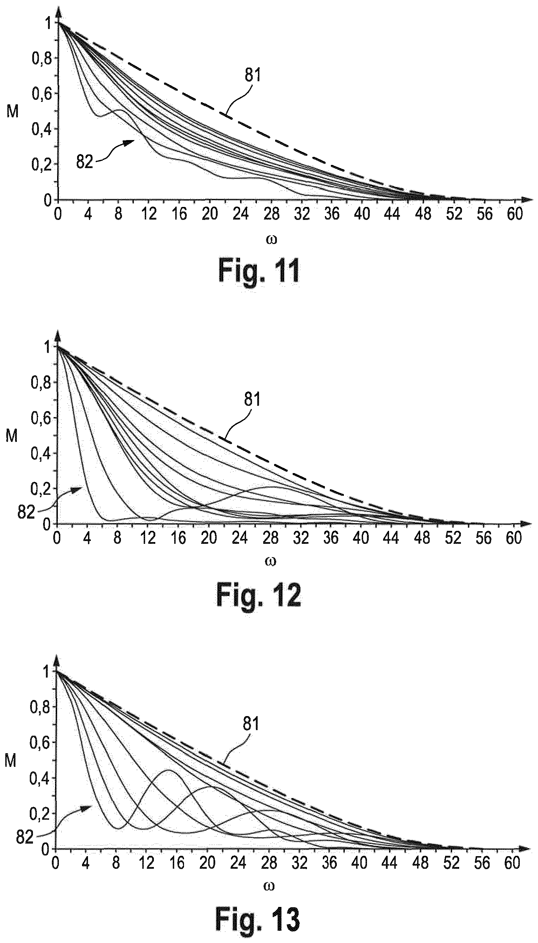

Fig. 11 bis Fig. 13 zeigen Abbildungen der Modulationstransferfunktion (MTF), auch als Modulationsübertragungsfunktion oder Kontrastübertragungsfunktion bezeichnet, bei einem Dioptrienwert von 4dptr. Die horizontale Achse gibt die Ortfrequenz $\omega$ in Zyklen pro Millimeter an. Die vertikale Achse gibt die Amplitude einer erreichbaren Modulation M an.

Fig. 11 zeigt eine MTF für ein ophthalmologisches optisches Element 1 gemäß einem Aspekt der vorliegenden Erfindung, wie beispielsweise in Fig. 1 dargestellt. Fig. 12 zeigt eine MTF für ein klassisches sphärisches Brillenglas. Fig. 13 zeigt eine MTF für ein klassisches Brillenglas mit Freiformfläche.

In den Darstellungen gibt die gestrichelte Kurve 81 jeweils das beugungsbegrenzte Maximum der MTF an. Die weiteren Kurven 82 geben die erreichbare Modulation bei verschiedenen Sehwinkeln an.

Aus dem Vergleich der Fig. 11 mit Fig. 12 und Fig. 13 wird deutlich, dass mit dem ophthalmologischen optischen Element 1 gemäß einem Aspekt der vorliegenden Erfindung gegenüber klassischen Brillengläsern über ein großes Sehfeld eine verbesserte Übertragungsfunktion erreicht werden kann.

**Patentansprüche**

1. Ophthalmologisches optisches Element (1) zur Korrektur von Sehfehlern, insbesondere Brillenglas, mit

    einem ersten refraktiven optischen Substrat (10), welches eine positive oder negative erste optische Brechkraft (D1) aufweist;
    einem ersten diffraktiven optischen Element (21), welches eine zweite optische Brechkraft (D2) aufweist;
    einem zweiten diffraktiven optischen Element (22), welches eine dritte optische Brechkraft (D3) aufweist;
    wobei das erste diffraktive optische Element (21) und das zweite diffraktive optische Element (22) eine entgegengesetzte optische Brechkraft aufweisen und **dadurch gekennzeichnet, dass** der Betrag einer Summe der zweiten optischen Brechkraft (D2) des ersten diffraktiven optischen Elements (21) und der dritten optischen Brechkraft (D3) des zweiten diffraktiven optischen Elements (22) geteilt durch einen Betrag einer Differenz der zweiten optischen Brechkraft (D2) und der dritten optischen Brechkraft (D3) kleiner als 1/10, insbesondere kleiner als 1/15, insbesondere kleiner als 1/20 ist.

2. Ophthalmologisches optisches Element nach Anspruch 1, wobei das erste diffraktive optische Element (21) und das zweite diffraktive optische Element (22) zusammen mit dem ersten refraktiven optischen Substrat (10) achromatisch zusammenwirken.

3. Ophthalmologisches optisches Element nach einem der vorhergehenden Ansprüche, **dadurch gekennzeichnet, dass** das erste optische Substrat (10) eine Vorderfläche (11) und eine Rückfläche (12) aufweist und wobei das erste diffraktive optische Element (21) auf der Seite der Vorderfläche (11) angeordnet ist und/oder das zweites diffraktive optische Element (22) auf der Seite der Rückfläche (12) angeordnet ist.

4. **Ophthalmologisches** optisches Element nach einem der vorhergehenden Ansprüche, mit einem zweiten optischen Substrat (30), welches das erste diffraktive optische Element (21) und/oder das zweite diffraktive optische Element (22) aufweist; insbesondere wobei das erste optische Substrat eine Vorderfläche (11) und eine Rückfläche (12) aufweist und wobei das zweite optische Substrat (30) auf der Seite der Vorderfläche (11) oder der Rückfläche (12) des ersten optischen Substrats (10) angeordnet ist.

5. Ophthalmologisches optisches Element nach Anspruch 5, wobei das zweite optische Substrat (30) eine Folie, ein Glas oder eine Kunststoffschale aufweist; und/oder wobei eine Kittschicht (13) oder ein Luftspalt zwischen dem ersten optischen Substrat (10) und dem zweiten optische Substrat (30) angeordnet ist.

6. Ophthalmologisches optisches Element nach einem der vorhergehenden Ansprüche, wobei das erste und/oder zweite diffraktive optische Element (21, 22) rotationssymmetrisch zu einer optischen Achse ist.

7. Ophthalmologisches optisches Element nach einem der vorhergehenden Ansprüche, wobei das erste und zweite diffraktive optische Element (21,22) in einer Querschnittsebene jeweils durch ein Phasenpolynom zweiter oder höherer Ordnung beschrieben werden, wobei zwischen einem ersten Koeffizienten $a_{1,DOE1}$ des Phasenpolynoms des ersten diffraktiven optischen Elements (21) und einem ersten Koeffizienten $a_{1,DOE2}$ des Phasenpolynoms des zweiten diffraktiven optischen Elements (22) mit einem Toleranzbereich von $\pm 20\%$, insbesondere $\pm 10\%$, insbesondere $\pm 5\%$, folgende Beziehung gilt:

$$\left| \frac{a_{1,DOE1}}{a_{1,DOE1} + a_{1DOE2}} \right| = \frac{20}{\sqrt{D}\sqrt{d}} \, ,$$

wobei D eine resultierende zusätzliche optische Brechkraft durch das erste und zweite diffraktive optische Element angibt, d einen Abstand des ersten und zweiten diffraktiven optischen Elements, und $\lambda_0$ eine Designwellenlänge.

8. Brille mit einer Fassung und einem ersten und einem zweiten Brillenglas, **dadurch gekennzeichnet, dass** das erste und/oder zweite Brillenglas ein ophthalmologisches optisches Element (1) nach einem der Ansprüche 1 bis 7 ist.

9. Kopfgetragene Anzeigevorrichtung (60) mit einem ophthalmologischen optischen Element (1) nach einem der Ansprüche 1 bis 7,
wobei das ophthalmologische optische Element (1) ferner eine Einkopplungsoptik (61) aufweist, welche dazu ausgebildet ist, ein anzuzeigendes Bild mittels des ersten optischen Substrats (10) des ophthalmologischen optischen Elements (1) einzukoppeln.

10. Computerimplementiertes Verfahren zum Auslegen eines ophthalmologischen optischen Elements (1), insbesondere Brillenglases, zum Zweck seiner Herstellung, wobei das ophthalmologische optische Element (1)

ein erstes optisches Substrat (10), welches eine positive oder negative erste optische Brechkraft (D1) aufweist;
ein erstes diffraktives optischen Element (21), welches eine zweite optische Brechkraft (D2) aufweist; und
ein zweites diffraktives optisches Element (22), welches eine dritte optische Brechkraft (D3) aufweist; aufweist,
wobei das erste diffraktive optische Element (21) und das zweite diffraktive optische Element (22) eine entgegengesetzte optische Brechkraft aufweisen;
wobei das Verfahren die folgenden Schritte aufweist:

- Auswahl (S101) des ersten optischen Substrats (10), welches eine positive oder negative erste optische Brechkraft (D1) aufweist, gemäß einem zu korrigierenden Dioptrienbereich;
- Bereitstellen (S102) des ersten diffraktiven optischen Elements (21), welches die zweite optische Brechkraft (D2) aufweist, und des zweiten diffraktiven optischen Elements (22), welches die dritte optische Brechkraft (D3) aufweist; wobei das erste und zweite diffraktive optische Element (21, 22) derart ausgewählt werden, dass ein Betrag einer Summe der zweiten optischen Brechkraft (D2) des ersten diffraktiven optischen Elements (21) und der dritten optischen Brechkraft (D3) des zweiten diffraktiven optischen Elements (22) geteilt durch einen Betrag einer Differenz der zweiten optischen Brechkraft (D2) und der dritten optischen Brechkraft (D3) kleiner als 1/10, insbesondere kleiner als 1/15, insbesondere kleiner als 1/20 ist.

11. Verfahren nach Anspruch 10, **dadurch gekennzeichnet, dass** die Auswahl des ersten optischen Substrats (10) aus einem Satz von vorgegebenen ersten optischen Substraten erfolgt, wobei jedes der vorgegebenen optischen Substrate (10) als Basis für einen zu korrigierenden Dioptrienbereich fungiert, insbesondere weist der Satz von vorgegebenen ersten optischen Substraten wenigstens einen der folgenden Dioptrienbereiche auf 0...+5dptr, 0...-5dptr, +5...+8dptr und -5...-8dptr; insbesondere wobei ein Substrat des Satzes von vorgegebenen ersten optischen Substraten (10) als Basis für einen Dioptrienbereich von wenigstens 2, insbesondere wenigstens 3, insbesondere wenigstens 4 Dioptrien fungiert.

12. Verfahren zum Herstellen eines ophthalmologischen optischen Elements (1), insbesondere Brillenglases, mit den Schritten:

- Auslegen des ophthalmologischen optischen Elements nach einem Verfahren gemäß einem der Ansprüche 10 bis 11, und
- Herstellen des ophthalmologischen optischen Elements (1).

13. Computerprogrammprodukt mit Programmcode zur Durchführung eines Verfahrens nach einem der Ansprüche 10 bis 11, wenn das Computerprogrammprodukt auf einer Datenverarbeitungsanlage ausgeführt wird.

**Claims**

1. Ophthalmological optical element (1) for correcting visual defects, in particular a spectacle lens, having

a first refractive optical substrate (10), which has a positive or negative first optical power (D1);
a first diffractive optical element (21), which has a second optical power (D2);
a second diffractive optical element (22), which has a third optical power (D3);
wherein the first diffractive optical element (21) and the second diffractive optical element (22) have opposite optical powers, and **characterized in that** the absolute value of a sum of the second optical power (D2) of the first diffractive optical element (21) and the third optical power (D3) of the second diffractive optical element (22) divided by an absolute value of a difference between the second optical power (D2) and the third optical power (D3) is less than 1/10, in particular less than 1/15 and in particular less than 1/20.

2. Ophthalmological optical element according to Claim 1, wherein the first diffractive optical element (21) and the second diffractive optical element (22) interact in an achromatic manner together with the first refractive optical substrate (10).

3. Ophthalmological optical element according to either of the preceding claims, **characterized in that** the first optical substrate (10) has a front surface (11) and a back surface (12) and wherein the first diffractive optical element (21) is arranged on the side of the front surface (11) and/or the second diffractive optical element (22) is arranged on the side of the back surface (12).

4. Ophthalmological optical element according to any of the preceding claims, having a second optical substrate (30) that has the first diffractive optical element (21) and/or the second diffractive optical element (22); in particular wherein the first optical substrate has a front surface (11) and a back surface (12) and wherein the second optical substrate (30) is arranged on the side of the front surface (11) or the back surface (12) of the first optical substrate (10).

5. **Ophthalmological** optical element according to Claim 5, wherein the second optical substrate (30) has a film, a glass or a plastics shell; and/or wherein a cemented layer (13) or an air gap is arranged between the first optical substrate (10) and the second optical substrate (30).

6. Ophthalmological optical element according to any of the preceding claims, wherein the first and/or second diffractive optical element (21, 22) is rotationally symmetric with respect to an optical axis.

7. Ophthalmological optical element according to any of the preceding claims, wherein the first and second diffractive optical elements (21, 22) are each described by a phase polynomial of a second or higher order in a cross-sectional plane, wherein, with a tolerance range of $\pm 20\%$, in particular $\pm 10\%$ and in particular $\pm 5\%$, the following relationship applies between a first coefficient $a_{1,DOE1}$ of the phase polynomial of the first diffractive optical element (21) and a first coefficient $a_{1,DOE2}$ of the phase polynomial of the second diffractive optical element (22):

$$\left| \frac{a_{1,DOE1}}{a_{1,DOE1} + a_{1DOE2}} \right| = \frac{20}{\sqrt{D}\sqrt{d}} ,$$

where D specifies a resultant additional optical power by the first and second diffractive optical elements, d specifies a distance between the first and second diffractive optical elements and $\lambda_0$ specifies a design wavelength.

8. Pair of spectacles having a frame and a first and a second spectacle lens, **characterized in that** the first and/or second spectacle lens is an ophthalmological optical element (1) according to any of Claims 1 to 7.

9. Head-mounted display apparatus (60) having an ophthalmological optical element (1) according to any of Claims 1 to 7,
wherein the ophthalmological optical element (1) further has an input coupling optical unit (61) that, by means of the first optical substrate (10) of the ophthalmological optical element (1), is embodied to input couple an image to be displayed.

10. Computer-implemented method for designing an ophthalmological optical element (1), in particular a spectacle lens, for the purpose of the production thereof, wherein the ophthalmological optical element (1) has

a first optical substrate (10), which has a positive or negative first optical power (D1);
a first diffractive optical element (21), which has a second optical power (D2); and
a second diffractive optical element (22), which has a third optical power (D3);
wherein the first diffractive optical element (21) and the second diffractive optical element (22) have opposite optical powers;
wherein the method includes the following steps:

- selecting (S101) the first optical substrate (10), which has a positive or negative first optical power (D1), according to a dioptre range to be corrected;
- providing (S102) the first diffractive optical element (21), which has the second optical power (D2), and the second diffractive optical element (22), which has the third optical power (D3); wherein the first and second diffractive optical elements (21, 22) are selected in such a way that an absolute value of a sum of the second optical power (D2) of the first diffractive optical element (21) and the third optical power (D3) of the second diffractive optical element (22) divided by an absolute value of a difference between the second optical power (D2) and the third optical power (D3) is less than 1/10, in particular less than 1/15 and in particular less than 1/20.

11. Method according to Claim 10, **characterized in that** the first optical substrate (10) is selected from a set of predetermined first optical substrates, wherein each of the predetermined optical substrates (10) acts as a basis for a dioptre range to be corrected, the set of predetermined first optical substrates having, in particular, at least one of the following dioptre ranges: 0...+5dpt, 0...-5dpt, +5...+8dpt and -5...-8dpt; in particular wherein a substrate of the set of predetermined first optical substrates (10) acts as a basis for a dioptre range of at least 2, in particular at least 3 and in particular at least 4 dioptres.

12. Method for producing an ophthalmological optical element (1), in particular a spectacle lens, including the steps of:

- designing the ophthalmological optical element in accordance with a method according to either of Claims 10 and 11, and
- producing the ophthalmological optical element (1).

13. Computer program product having program code for carrying out a method according to either of Claims 10 and 11 when the computer program product is executed on a data processing system.

**Revendications**

1. Élément optique ophtalmologique (1) pour la correction de défauts de la vue, en particulier verre de lunettes, comprenant

un premier substrat optique réfractif (10) qui présente une première puissance de réfraction optique positive ou négative (D1) ;
un premier élément optique diffractif (21) qui présente une deuxième puissance de réfraction optique (D2) ;
un deuxième élément optique diffractif (22) qui présente une troisième puissance de réfraction optique (D3) ;
le premier élément optique diffractif (21) et le deuxième élément optique diffractif (22) présentant une puissance de réfraction optique opposée, **caractérisé en ce que** la valeur d'une somme de la deuxième puissance de réfraction optique (D2) du premier élément optique diffractif (21) et de la troisième puissance de réfraction optique (D3) du deuxième élément optique diffractif (22) divisée par une valeur d'une différence de la deuxième puissance de réfraction optique (D2) et de la troisième puissance de réfraction optique (D3) est inférieure à 1/10, en particulier inférieure à 1/15, en particulier inférieure à 1/20.

2. Élément optique ophtalmologique selon la revendication 1, dans lequel le premier élément optique diffractif (21) et le deuxième élément optique diffractif (22) interagissent de manière achromatique avec le premier substrat optique réfractif (10).

3. Élément optique ophtalmologique selon l'une des revendications précédentes, caractérisé en ce le premier substrat optique (10) présente une face avant (11) et une face arrière (12), le premier élément optique diffractif (21) étant agencé du côté de la face avant (11) et/ou le deuxième élément optique diffractif (22) étant agencé du côté de la face arrière (12).

4. Élément optique ophtalmologique selon l'une des revendications précédentes, ayant un deuxième substrat optique (30) qui présente le premier élément optique diffractif (21) et/ou le deuxième élément optique diffractif (22) ; en particulier, dans lequel le premier **substrat** optique présente une face avant (11) et une face arrière (12), et le deuxième substrat optique (30) est agencé du côté de la face avant (11) ou de la face arrière (12) du premier substrat optique (10).

5. Élément optique ophtalmologique selon la revendication 5, dans lequel le deuxième substrat optique (30) comprend une feuille, un verre ou une coque en plastique ; et/ou dans lequel une couche de ciment (13) ou un espace d'air est agencé entre le premier substrat optique (10) et le deuxième substrat optique (30).

6. Élément optique ophtalmologique selon l'une des revendications précédentes, dans lequel le premier et/ou le deuxième élément optique diffractif (21, 22) présente une symétrie de rotation par rapport à un axe optique.

7. Élément optique ophtalmologique selon l'une des revendications précédentes, dans lequel le premier et le deuxième éléments optiques diffractifs (21, 22) sont décrits chacun par un polynôme de phase d'ordre deux ou plus dans un plan de coupe transversale, où, entre un premier coefficient $a_{1,DOE1}$ du polynôme de phase du premier élément optique diffractif (21) et un premier coefficient $a_{1,DOE2}$ du polynôme de phase du deuxième élément optique diffractif (22), avec une plage de tolérance de $\pm 20$ %, en particulier $\pm 10$ %, en particulier $\pm 5$ %, la relation suivante s'applique :

$$\left| \frac{a_{1,DOE1}}{a_{1,DOE1} + a_{1,DOE2}} \right| = \frac{20}{\sqrt{D}\sqrt{d}}$$

,

dans laquelle D indique une puissance optique supplémentaire résultante à travers le premier et le deuxième éléments optiques diffractifs, d indique une distance entre le premier et le deuxième éléments optiques diffractifs, et indique $\lambda_0$ une longueur d'onde de conception.

8. Lunettes comprenant une monture et un premier et un deuxième verres de lunettes, **caractérisées en ce que** le premier et/ou le deuxième verres de lunettes est un élément optique ophtalmologique (1) selon l'une des revendications 1 à 7.

9. Dispositif d'affichage (60) porté sur une tête, comprenant un élément optique ophtalmologique (1) selon l'une des revendications 1 à 7,
l'élément optique ophtalmologique (1) comportant en outre une optique de liaison (61) qui est conçue pour relier une image à afficher au moyen du premier substrat optique (10) de l'élément optique ophtalmologique (1).

10. Procédé mis en œuvre par ordinateur pour la conception d'un élément optique ophtalmologique (1), en particulier un verre de lunettes, en vue de sa fabrication, l'élément optique ophtalmologique (1) comprenant

un premier substrat optique (10), qui présente une première puissance de réfraction optique positive ou négative (D1) ;
un premier élément optique diffractif (21), qui présente une deuxième puissance de réfraction optique (D2) ; et
un deuxième élément optique diffractif (22), qui présente une troisième puissance de réfraction optique (D3), le premier élément optique diffractif (21) et le deuxième élément optique diffractif (22) présentant une puissance de réfraction optique opposée ;
le procédé comprenant les étapes suivantes :

- sélection (S101) du premier substrat optique (10) qui présente une première puissance de réfraction optique positive ou négative (D1), en fonction d'une plage de dioptries à corriger ;
- fournir (S102) le premier élément optique diffractif (21) qui présente la deuxième puissance optique (D2) et le deuxième élément optique diffractif (22) qui présente la troisième puissance optique (D3) ; dans lequel le premier et le deuxième éléments optiques diffractifs (21, 22) sont choisis de telle sorte que la somme de la deuxième puissance de réfraction optique (D2) du premier élément optique diffractif (21) et de la troisième puissance de réfraction optique (D3) du deuxième élément optique diffractif (22) divisée par la différence entre la deuxième puissance de réfraction optique (D2) et la troisième puissance de réfraction optique (D3) soit inférieure à 1/10, en particulier inférieure à 1/15, en particulier inférieure à 1/20.

11. Procédé selon la revendication 10, **caractérisé en ce que** la sélection du premier substrat optique (10) se fait parmi un ensemble de premiers substrats optiques prédéfinis, chacun des substrats optiques prédéfinis (10) servant de base à une plage de dioptries à corriger, en particulier l'ensemble de premiers substrats optiques prédéfinis présente au moins l'une des plages de dioptries suivantes : 0 ... +5dptr, 0 ... -5dptr, +5 ... +8dptr et - 5 ... -8dptr ; en particulier, un substrat de l'ensemble de premiers substrats optiques prédéfinis (10) sert de base pour une plage de dioptries d'au moins 2, en particulier d'au moins 3, en particulier d'au moins 4 dioptries.

12. Procédé de fabrication d'un élément optique ophtalmologique (1), en particulier d'un verre de lunettes, comprenant les étapes suivantes :

- mise en forme de l'élément optique ophtalmologique par un procédé selon l'une des revendications 10 à 11, et
- fabrication de l'élément optique ophtalmologique (1).

13. Produit logiciel avec code de programme pour la mise en œuvre d'un procédé selon l'une des revendications 10 à 11, lorsque le produit logiciel est exécuté sur un système de traitement de données.

EP 3 391 129 B1

Fig. 1

Fig. 2

I ←

0

21,22

y ×

I ←

**Fig. 3**

1

22
30

21

10

60

61

41

40a

62

63

**Fig. 4**

S101

S102

**Fig. 5**

S201

S202

S203

S204

**Fig. 6**

**Fig. 7**

**Fig. 8**

**Fig. 9**

**Fig. 10**

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010047846 A1
- US 20060050234 A1
- DE 102006061066 A1
- US 5117306 A
- EP 1072906 A2

**In der Beschreibung aufgeführte Nicht-Patentliteratur**

- **ROBERT R. SHANNON**. The Art and Science of Optical Design. Cambridge University Press, 1997
- **LEVOLA**. Diffractive optics for virtual reality displays. *Journal of the Society for Information Display*, May 2006, vol. 14 (5), 467-475